(19) Europäisches Patentamt

European Patent Office

Office européen des brevets

(11) **EP 4 455 170 A1**

(12) **EUROPEAN PATENT APPLICATION**

(43) Date of publication:
**30.10.2024 Bulletin 2024/44**

(21) Application number: **23170578.1**

(22) Date of filing: **28.04.2023**

(51) International Patent Classification (IPC):
*C08F 210/16* (2006.01)      *C08L 23/08* (2006.01)
*C08F 4/659* (2006.01)

(52) Cooperative Patent Classification (CPC):
(C-Sets available)
**C08F 210/16;** C08F 4/65912; C08F 4/65916;
C08L 23/0815                                                (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
 • **Borealis AG**
   **1020 Vienna (AT)**
 • **Abu Dhabi Polymers Co. Ltd (Borouge) - Sole
   Proprietorship L.L.C.
   Abu Dhabi (AE)**

(72) Inventors:
 • **HJÄRTFORS, Anna**
   **444 86 Stenungsund (SE)**
 • **ANKER, Martin**
   **444 86 Stenungsund (SE)**
 • **MALMROS, Peter Johann Ryott**
   **Houston Texas, 77042 (US)**
 • **NAZIM, Muhammad**
   **Abu Dhabi (AE)**

(74) Representative: **Maiwald GmbH**
   **Elisenhof**
   **Elisenstraße 3**
   **80335 München (DE)**

(54) **CABLE COMPOSITIONS COMPRISING A MULTIMODAL ETHYLENE-BUTENE-HEXENE TERPOLYMER**

(57)     A polyethylene composition (PC) comprising a multimodal C2C4C6 terpolymer (PE) with a density of 910 to 930 kg/m$^3$,
wherein the polyethylene composition (PC) has:

a) an MFR$_2$ of 0.5 to 3.0 g/10 min;
b) eta$_{300}$ of 800 to 2,000 Pa.s; and
c) (Mw/Mn) of 2.0 to 10.0.

EP 4 455 170 A1

**(Cont. next page)**

(52) Cooperative Patent Classification (CPC): (Cont.)

C-Sets
**C08F 210/16, C08F 2/001;**
**C08F 210/16, C08F 4/6492;**
**C08F 210/16, C08F 4/65925;**
C08F 210/16, C08F 210/08, C08F 2500/12;
C08F 210/16, C08F 210/08, C08F 2500/12,
C08F 2500/27;
C08F 210/16, C08F 210/14, C08F 210/08,
C08F 2500/12, C08F 2500/27, C08F 2500/09,
C08F 2500/30;
C08L 23/0815, C08L 23/0815

**Description**

**Field of the Invention**

The present invention relates to a polyethylene composition (PC) comprising a multimodal ethylene-butene-hexene terpolymer (PE), to a process for producing said polyethylene composition (PC) and to layer elements and cables containing said polyethylene composition (PC).

**Background to the Invention**

A typical power cable comprises a conductor surrounded, at least, by an inner semiconductive layer, an insulation layer and an outer semiconductive layer, in that order. The cable is then also provided with a cable jacket.

The cables are commonly produced by extruding the layers on a conductor. Flexibility and abrasion resistance are two of the key properties of a cable jacket material. Flexibility allows the cable to be more easily handled during installation and better abrasion resistance makes cable more robust during installation in the ground. There is a general need therefore for a flexible and abrasion resistant cable. A more robust cable jacket may allow the use of a thinner jacket making the cable lighter, more flexible and cheaper.

It is generally known that higher density polyethylenes, such as medium and high density polyethylenes, may be used to achieve a good wear resistance; however, this improvement generally comes at the cost of reduced flexibility (higher Flexural Modulus). HLZ:JN

Until now, it has not been possible to achieve a suitably high wear resistance whilst maintaining excellent flexibility.

**Summary of the Invention**

The present invention is based on the finding that an excellent balance of flexibility and wear resistance can be achieved by using certain multimodal ethylene-butene-hexene terpolymers having particularly narrow molecular weight distribution and a high high-flow complex viscosity.

Therefore, in a first aspect, the present invention is directed to a polyethylene composition (PC) comprising a multimodal ethylene-butene-hexene terpolymer (PE), wherein the multimodal ethylene-butene-hexene terpolymer (PE) has a density, determined according to ISO 1183, in the range from 910 to 930 $kg/m^3$, more preferably in the range from 913 to 925 $kg/m^3$, most preferably in the range from 915 to 920 $kg/m^3$,
wherein the polyethylene composition (PC) has:

   a) a melt flow rate ($MFR_2$), determined according to ISO 1133 at 190 °C and 2.16 kg, in the range from 0.5 to 3.0 g/10 min, more preferably in the range from 0.6 to 2.0 g/10 min, most preferably in the range from 0.7 to 1.2 g/10 min;
   b) a complex viscosity ($eta_{300}$), determined according to ISO 6721-1 at an angular frequency of 300 rad/s, in the range from 800 to 2,000 Pa.s, more preferably in the range from 1,000 to 1,800 Pa.s, most preferably in the range from 1,200 to 1,600 Pa.s; and
   c) a molecular weight distribution (Mw/Mn), determined by gel permeation chromatography (GPC), in the range from 2.0 to 10.0, more preferably in the range from 3.0 to 7.0, most preferably in the range from 4.0 to 5.0.

In a further aspect, the present invention is directed to a process for producing the polyethylene composition (PC) of the first aspect, comprising, more preferably consisting of, the steps of:

   i) providing a catalyst;
   ii) optionally prepolymerizing a catalyst in a prepolymerization reactor in the presence of ethylene and 1-butene comonomer units, thereby obtaining a prepolymerized catalyst;
   iii) polymerizing ethylene and 1-butene comonomer units in a first polymerization reactor in the presence of the optionally prepolymerized catalyst to produce a first polymerization mixture comprising the catalyst and a first polymer fraction (PE1) consisting of ethylene and 1-butene comonomers;
   iv) transferring the first polymerization mixture into a second polymerization reactor;
   v) polymerizing ethylene and 1-hexene comonomer units in the second polymerization reactor in the presence of the catalyst to produce a second polymerization mixture comprising the catalyst, the first polymer fraction (PE1) consisting of ethylene and 1-butene comonomers, and a second polymer fraction (PE2) consisting of ethylene and 1-hexene comonomers;
   vi) compounding said second polymerization mixture, optionally with the addition of carbon black (CB) and/or one or more further additives (A) to form the polyethylene composition (PC).

In a final aspect, the present invention is directed to layer element (LE) comprising the polyethylene composition (PC) of the first aspect, preferably in an amount of at least 95 wt.-%, more preferably at least 98 wt.-%, most preferably at least 99 wt.-%.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a", "an", and the like refers to one or more.

In the following, amounts are given in % by weight (wt.-%) unless it is stated otherwise.

An ethylene homopolymer is a polymer that essentially consists of ethylene monomer units. Due to impurities especially during commercial polymerization processes, an ethylene homopolymer can comprise up to 0.1 mol% comonomer units, preferably up to 0.05 mol% comonomer units and most preferably up to 0.01 mol% comonomer units.

An ethylene copolymer is a copolymer of ethylene monomer units and comonomer units, preferably selected from Cs-Cs alpha-olefins. Ethylene copolymers can comprise comonomer units from one or more comonomers different in their amounts of carbon atoms. In the context of the present invention, the term "copolymer of A and B" means that only units derived from A and B may be present, excluding, for example, terpolymers containing units derived from A, B and C.

An ethylene terpolymer is an ethylene copolymer, as described above, which consists of ethylene and two different comonomer units, typically selected from Cs-Cs alpha-olefins.

In the case of multimodal ethylene terpolymers, the various fractions that make up the multimodal ethylene terpolymer may individually be ethylene homopolymers, ethylene copolymers or ethylene terpolymers, i.e. the individual fractions of the multimodal ethylene terpolymer do not need to contain all of the comonomers present in the overall multimodal ethylene terpolymer.

Multimodal polymers are polymers having a multimodal distribution of one or more properties. Multimodal ethylene terpolymers may typically be multimodal with respect to comonomer content or multimodal with respect to molecular weight (as seen through the melt flow rates of the respective fractions and the final composition).

Bimodal polymers are polymers having a bimodal distribution of one or more properties. Bimodal random ethylene terpolymers may typically be bimodal with respect to comonomer content or bimodal with respect to molecular weight (as seen through the melt flow rates of the first fraction and the final composition).

The present invention will now be described in more detail.

**Detailed Description**

**Multimodal ethylene-butene-hexene terpolymer (PE)**

An essential component of the polyethylene composition (PC) of the first aspect is the multimodal ethylene-butene-hexene terpolymer (PE).

The multimodal ethylene-butene-hexene terpolymer (PE) consists of monomer units derived from ethylene, 1-butene and 1-hexene.

The multimodal ethylene-butene-hexene terpolymer (PE) has a density, determined according to ISO 1183, in the range from 910 to 930 $kg/m^3$, more preferably in the range from 913 to 925 $kg/m^3$, most preferably in the range from 915 to 920 $kg/m^3$.

The multimodal ethylene-butene-hexene terpolymer (PE) preferably has a melt flow rate ($MFR_2$), determined according to ISO 1133 at 190 °C and 2.16 kg, in the range from 0.5 to 3.0 g/10 min, more preferably in the range from 0.6 to 2.0 g/10 min, most preferably in the range from 0.7 to 1.2 g/10 min.

The multimodal ethylene-butene-hexene terpolymer (PE) preferably has a melt flow rate ($MFR_{21}$), determined according to ISO 1133 at 190 °C and 21.6 kg, in the range from 10 to 40 g/10 min, more preferably in the range from 15 to 30 g/10 min, most preferably in the range from 17 to 25 g/10 min.

The multimodal ethylene-butene-hexene terpolymer (PE) preferably has a flow rate ratio ($FRR_{21/2}$), determined according to ISO 1133 at 190 °C and 2.16 kg/21.6 kg, in the range from 10 to 30, more preferably in the range from 15 to 25, most preferably in the range from 17 to 23.

The multimodal ethylene-butene-hexene terpolymer (PE) preferably has a complex viscosity ($eta_{300}$), determined according to ISO 6721-1 at an angular frequency of 300 rad/s, in the range from 800 to 2,000 Pa.s, more preferably in the range from 1,000 to 1,800 Pa.s, most preferably in the range from 1,200 to 1,600 Pa.s.

The multimodal ethylene-butene-hexene terpolymer (PE) preferably has a complex viscosity (eta$_{0.05}$), determined according to ISO 6721-1 at an angular frequency of 0.05 rad/s, in the range from 2,000 to 15,000 Pa.s, more preferably in the range from 4,000 to 13,000 Pa.s, most preferably in the range from 6,000 to 11,000 Pa.s.

The multimodal ethylene-butene-hexene terpolymer (PE) preferably has a shear thinning index (SHI$_{2.7/210}$), determined according to ISO 6721-1, in the range from 1.0 to 10.0, more preferably in the range from 1.5 to 7.0, most preferably in the range from 2.0 to 4.0.

The multimodal ethylene-butene-hexene terpolymer (PE) preferably has an elasticity index (EI (5kPa)), determined according to ISO 6721-1, in the range from 200 to 1,500 Pa, more preferably in the range from 300 to 1,100 Pa, more preferably in the range from 400 to 700 Pa.

The multimodal ethylene-butene-hexene terpolymer (PE) preferably has a relaxation time (t), wherein G(t) = 100 Pa, as determined according to ISO 6721, in the range from 0.5 to 10.0 s, more preferably in the range from 1.0 to 7.0 s, most preferably in the range from 1.5 to 4.0 s.

The multimodal ethylene-butene-hexene terpolymer (PE) preferably has a number average molecular weight (Mn), determined by gel permeation chromatography (GPC), in the range from 14,000 to 30,000 g/mol, more preferably in the range from 16,000 to 28,000 g/mol, most preferably in the range from 18,000 to 26,000 g/mol.

The multimodal ethylene-butene-hexene terpolymer (PE) preferably has a weight average molecular weight (Mw), determined by gel permeation chromatography (GPC), in the range from 80,000 to 120,000 g/mol, more preferably in the range from 85,000 to 115,000 g/mol, most preferably in the range from 90,000 to 110,000 g/mol.

The multimodal ethylene-butene-hexene terpolymer (PE) preferably has a z-average molecular weight (Mz), determined by gel permeation chromatography (GPC), in the range from 150,000 to 300,000 g/mol, more preferably in the range from 160,000 to 260,000 g/mol, most preferably in the range from 170,000 to 220,000 g/mol.

The multimodal ethylene-butene-hexene terpolymer (PE) preferably has a molecular weight distribution (Mw/Mn), determined by gel permeation chromatography (GPC), in the range from 2.0 to 10.0, more preferably in the range from 3.0 to 7.0, most preferably in the range from 4.0 to 5.0.

The multimodal ethylene-butene-hexene terpolymer (PE) preferably has a molecular weight distribution (Mz/Mw), determined by gel permeation chromatography (GPC), in the range from 1.5 to 5.0, more preferably in the range from 1.6 to 4.0, most preferably in the range from 1.7 to 3.0.

The multimodal ethylene-butene-hexene terpolymer (PE) preferably has a 1-butene content (C4), determined by quantitative $^{13}$C-NMR spectroscopy, in the range from 0.10 to 2.0 mol%, more preferably in the range from 0.20 to 1.00 mol%, most preferably in the range from 0.25 to 0.50 mol%.

The multimodal ethylene-butene-hexene terpolymer (PE) preferably has a 1-hexene content (C6), determined by quantitative $^{13}$C-NMR spectroscopy, in the range from 0.50 to 4.0 mol%, more preferably in the range from 1.00 to 3.0 mol%, most preferably in the range from 1.50 to 2.5 mol%.

The multimodal ethylene-butene-hexene terpolymer (PE) preferably has a total content of 1-butene and 1-hexene (C4+C6), determined by quantitative $^{13}$C-NMR spectroscopy, in the range from 0.60 to 6.0 mol%, more preferably in the range from 1.20 to 4.0 mol%, most preferably in the range from 1.75 to 3.0 mol%.

The multimodal ethylene-butene-hexene terpolymer (PE) preferably has a content of methyl groups per 1000 carbons (CH$_3$/1000C), as determined by infrared (IR) spectroscopic analysis, in the range from 10 to 20, more preferably in the range from 12 to 18, most preferably in the range from 13 to 17. Whilst, in the broadest sense, any infrared (IR) spectroscopic analysis should provide consistent results, it is particularly preferred that the method as described in the determination methods is employed.

In one particularly preferred embodiment, it is preferred that the multimodal ethylene-butene-hexene terpolymer (PE) consists of:

a) a first polymer fraction (PE1) consisting of ethylene and 1-butene comonomers;
b) a second polymer fraction (PE2) consisting of ethylene and 1-hexene comonomers; and
c) optionally, a third polymer fraction (PE3) consisting of ethylene and 1-butene monomers.

It is further preferred that the multimodal ethylene-butene-hexene terpolymer (PE) consists of:

a) 30 to 70 wt.-%, relative to the total weight of the multimodal ethylene-butene-hexene terpolymer (PE), more preferably 38 to 58 wt.-%, most preferably 42 to 52 wt.-%, of the first polymer fraction (PE1);
b) 30 to 70 wt.-%, relative to the total weight of the multimodal ethylene-butene-hexene terpolymer (PE), more preferably 40 to 60 wt.-%, most preferably 45 to 55 wt.-%, of the second polymer fraction (PE2); and
c) optionally from 0.0 to 6.0 wt.-%, relative to the total weight of the multimodal ethylene-butene-hexene terpolymer (PE), more preferably 0.5 to 5.0 wt.-%, most preferably 1.0 to 4.0 wt.-%, of the third polymer fraction (PE3).

The multimodal ethylene-butene-hexene terpolymer (PE) may thus consist of:

a) 30 to 70 wt.-%, relative to the total weight of the multimodal ethylene-butene-hexene terpolymer (PE), of the first polymer fraction (PE1);

b) 30 to 70 wt.-%, relative to the total weight of the multimodal ethylene-butene-hexene terpolymer (PE), of the second polymer fraction (PE2); and

c) optionally from 0.0 to 6.0 wt.-%, relative to the total weight of the multimodal ethylene-butene-hexene terpolymer (PE), of the third polymer fraction (PE3).

More preferably, the multimodal ethylene-butene-hexene terpolymer (PE) consists of:

a) 38 to 58 wt.-%, relative to the total weight of the multimodal ethylene-butene-hexene terpolymer (PE), of the first polymer fraction (PE1);

b) 40 to 60 wt.-%, relative to the total weight of the multimodal ethylene-butene-hexene terpolymer (PE), of the second polymer fraction (PE2); and

c) optionally from 0.5 to 5.0 wt.-%, relative to the total weight of the multimodal ethylene-butene-hexene terpolymer (PE), of the third polymer fraction (PE3).

Most preferably, the multimodal ethylene-butene-hexene terpolymer (PE) consists of:

a) 42 to 52 wt.-%, relative to the total weight of the multimodal ethylene-butene-hexene terpolymer (PE), of the first polymer fraction (PE1);

b) 45 to 55 wt.-%, relative to the total weight of the multimodal ethylene-butene-hexene terpolymer (PE), of the second polymer fraction (PE2); and

c) optionally from 1.0 to 4.0 wt.-%, relative to the total weight of the multimodal ethylene-butene-hexene terpolymer (PE), of the third polymer fraction (PE3).

In some embodiments, the multimodal ethylene-butene-hexene terpolymer contains a third polymer fraction, typically originating from a pre-polymerization process. In said embodiment, the multimodal ethylene-butene-hexene terpolymer (PE) consists of the first polymer fraction (PE1), the second polymer fraction (PE2) and the third polymer fraction (PE3).

Preferably, the multimodal ethylene-butene-hexene terpolymer consists of:

a) 30 to 70 wt.-%, relative to the total weight of the multimodal ethylene-butene-hexene terpolymer (PE), of the first polymer fraction (PE1);

b) 30 to 70 wt.-%, relative to the total weight of the multimodal ethylene-butene-hexene terpolymer (PE), of the second polymer fraction (PE2); and

c) 0.0 to 6.0 wt.-%, relative to the total weight of the multimodal ethylene-butene-hexene terpolymer (PE), of the third polymer fraction (PE3).

More preferably, the multimodal ethylene-butene-hexene terpolymer (PE) consists of:

a) 38 to 58 wt.-%, relative to the total weight of the multimodal ethylene-butene-hexene terpolymer (PE), of the first polymer fraction (PE1);

b) 40 to 60 wt.-%, relative to the total weight of the multimodal ethylene-butene-hexene terpolymer (PE), of the second polymer fraction (PE2); and

c) 0.5 to 5.0 wt.-%, relative to the total weight of the multimodal ethylene-butene-hexene terpolymer (PE), of the third polymer fraction (PE3).

Most preferably, the multimodal ethylene-butene-hexene terpolymer (PE) consists of:

a) 42 to 52 wt.-%, relative to the total weight of the multimodal ethylene-butene-hexene terpolymer (PE), of the first polymer fraction (PE1);

b) 45 to 55 wt.-%, relative to the total weight of the multimodal ethylene-butene-hexene terpolymer (PE), of the second polymer fraction (PE2); and

c) 1.0 to 4.0 wt.-%, relative to the total weight of the multimodal ethylene-butene-hexene terpolymer (PE), of the third polymer fraction (PE3).

Alternatively, the multimodal ethylene-butene-hexene terpolymer (PE) may not contain a third polymer fraction. In these embodiments, the multimodal ethylene-butene-hexene terpolymer (PE) consists of the first polymer fraction (PE1) and the second polymer fraction (PE2).

Preferably, the multimodal ethylene-butene-hexene terpolymer (PE) consists of:

a) 30 to 70 wt.-%, relative to the total weight of the multimodal ethylene-butene-hexene terpolymer (PE), of the first polymer fraction (PE1); and
b) 30 to 70 wt.-%, relative to the total weight of the multimodal ethylene-butene-hexene terpolymer (PE), of the second polymer fraction (PE2).

More preferably, the multimodal ethylene-butene-hexene terpolymer (PE) consists of:

a) 40 to 60 wt.-%, relative to the total weight of the multimodal ethylene-butene-hexene terpolymer (PE), of the first polymer fraction (PE1); and
b) 40 to 60 wt.-%, relative to the total weight of the multimodal ethylene-butene-hexene terpolymer (PE), of the second polymer fraction (PE2).

Most preferably, the multimodal ethylene-butene-hexene terpolymer (PE) consists of:

a) 45 to 55 wt.-%, relative to the total weight of the multimodal ethylene-butene-hexene terpolymer (PE), of the first polymer fraction (PE1); and
b) 45 to 55 wt.-%, relative to the total weight of the multimodal ethylene-butene-hexene terpolymer (PE), of the second polymer fraction (PE2).

The individual fractions are now discussed in more detail.

**First polymer fraction (PE1)**

The first polymer fraction (PE1) consists of ethylene and 1-butene comonomers.
The first polymer fraction (PE1) preferably has a 1-butene content, determined by quantitative $^{13}$C-NMR spectroscopy, in the range from 0.20 to 4.0 mol%, more preferably in the range from 0.40 to 2.0 mol%, most preferably in the range from 0.50 to 1.0 mol%, relative to the total amount of the first polymer fraction (PE1).
The first polymer fraction (PE1) preferably has a melt flow rate (MFR$_2$), determined according to ISO 1133 at 190 °C and 2.16 kg, in the range from 1.0 to 6.0 g/10 min, more preferably in the range from 1.3 to 4.5 g/10 min, most preferably in the range from 1.6 to 3.0 g/10 min.

**Second polymer fraction (PE2)**

The second polymer fraction (PE2) consists of ethylene and 1-hexene comonomers.
The second polymer fraction (PE2) preferably has a 1-hexene content, determined by quantitative $^{13}$C-NMR spectroscopy, in the range from 1.0 to 8.0 mol%, more preferably in the range from 2.0 to 6.0 mol%, most preferably in the range from 0.20 to 5.0 mol%, relative to the total amount of the second polymer fraction (PE2).
The second polymer fraction (PE2) preferably has a melt flow rate (MFR$_2$), determined according to ISO 1133 at 190 °C and 2.16 kg, in the range from 0.2 to 1.5 g/10 min, more preferably in the range from 0.3 to 1.0 g/10 min, most preferably in the range from 0.4 to 0.6 g/10 min.
If the first and second polymer fractions (PE1 and PE2) are produced in multiple polymerization reactors arranged in series, then the melt flow rate (MFR$_2$) of the second polymer fraction (PE2) will need to be calculated using an appropriate mixing rule, as would be well understood by the person skilled in the art.

**Third polymer fraction (PE3)**

The multimodal ethylene-butene-hexene copolymer may also contain small amounts of a third polymer fraction (PE3), which is the product of a prepolymerization step. The third polymer fraction (PE3), if present, preferably consists of ethylene and 1-butene comonomers.

**Polyethylene composition (PC)**

The polyethylene composition (PC) comprises the multimodal ethylene-butene-hexene terpolymer (PE).
More preferably, the polyethylene composition (PC) comprises the multimodal ethylene-butene-hexene terpolymer (PE) in an amount in the range from 90.0 to 100.0 wt.-%, more preferably in an amount in the range from 92.0 to 99.0 wt.-%, most preferably in an amount in the range from 94.0 to 97.0 wt.-%, relative to the total weight of the polyethylene composition (PC).

The polyethylene composition (PC) has a melt flow rate ($MFR_2$), determined according to ISO 1133 at 190 °C and 2.16 kg, in the range from 0.5 to 3.0 g/10 min, more preferably in the range from 0.6 to 2.0 g/10 min, most preferably in the range from 0.7 to 1.2 g/10 min.

The polyethylene composition (PC) preferably has a melt flow rate ($MFR_{21}$), determined according to ISO 1133 at 190 °C and 21.6 kg, in the range from 10 to 40 g/10 min, more preferably in the range from 15 to 30 g/10 min, most preferably in the range from 17 to 25 g/10 min.

The polyethylene composition (PC) preferably has a flow rate ratio ($FRR_{21/2}$), determined according to ISO 1133 at 190 °C and 2.16 kg/21.6 kg, in the range from 10 to 30, more preferably in the range from 15 to 25, most preferably in the range from 17 to 23.

The polyethylene composition (PC) has a complex viscosity ($eta_{300}$), determined according to ISO 6721-1 at an angular frequency of 300 rad/s, in the range from 800 to 2,000 Pa.s, more preferably in the range from 1,000 to 1,800 Pa.s, most preferably in the range from 1,200 to 1,600 Pa.s.

The polyethylene composition (PC) preferably has a complex viscosity ($eta_{0.05}$), determined according to ISO 6721-1 at an angular frequency of 0.05 rad/s, in the range from 2,000 to 15,000 Pa.s, more preferably in the range from 4,000 to 13,000 Pa.s, most preferably in the range from 6,000 to 11,000 Pa.s.

The polyethylene composition (PC) preferably has a shear thinning index ($SHI_{2.7/210}$), determined according to ISO 6721-1, in the range from 1.0 to 10.0, more preferably in the range from 1.5 to 7.0, most preferably in the range from 2.0 to 4.0.

The polyethylene composition (PC) preferably has an elasticity index (EI (5kPa)), determined according to ISO 6721-1, in the range from 200 to 1,500 Pa, more preferably in the range from 300 to 1,100 Pa, more preferably in the range from 400 to 700 Pa.

The polyethylene composition (PC) preferably has a relaxation time (t), wherein G(t) = 100 Pa, as determined according to ISO 6721, in the range from 0.5 to 10.0 s, more preferably in the range from 1.0 to 7.0 s, most preferably in the range from 1.5 to 4.0 s.

The polyethylene composition (PC) preferably has a number average molecular weight (Mn), determined by gel permeation chromatography (GPC), in the range from 14,000 to 30,000 g/mol, more preferably in the range from 16,000 to 28,000 g/mol, most preferably in the range from 18,000 to 26,000 g/mol.

The polyethylene composition (PC) preferably has a weight average molecular weight (Mw), determined by gel permeation chromatography (GPC), in the range from 80,000 to 120,000 g/mol, more preferably in the range from 85,000 to 115,000 g/mol, most preferably in the range from 90,000 to 110,000 g/mol.

The polyethylene composition (PC) preferably has a z-average molecular weight (Mz), determined by gel permeation chromatography (GPC), in the range from 150,000 to 300,000 g/mol, more preferably in the range from 160,000 to 260,000 g/mol, most preferably in the range from 170,000 to 220,000 g/mol.

The polyethylene composition (PC) has a molecular weight distribution (Mw/Mn), determined by gel permeation chromatography (GPC), in the range from 2.0 to 10.0, more preferably in the range from 3.0 to 7.0, most preferably in the range from 4.0 to 5.0.

The polyethylene composition (PC) preferably has a molecular weight distribution (Mz/Mw), determined by gel permeation chromatography (GPC), in the range from 1.5 to 5.0, more preferably in the range from 1.6 to 4.0, most preferably in the range from 1.7 to 3.0.

The polyethylene composition (PC) preferably has a 1-butene content (C4), determined by quantitative $^{13}$C-NMR spectroscopy, in the range from 0.10 to 2.0 mol%, more preferably in the range from 0.20 to 1.00 mol%, most preferably in the range from 0.25 to 0.50 mol%.

The polyethylene composition (PC) preferably has a 1-hexene content (C6), determined by quantitative $^{13}$C-NMR spectroscopy, in the range from 0.50 to 4.0 mol%, more preferably in the range from 1.00 to 3.0 mol%, most preferably in the range from 1.50 to 2.5 mol%.

The polyethylene composition (PC) preferably has a total content of 1-butene and 1-hexene (C4+C6), determined by quantitative $^{13}$C-NMR spectroscopy, in the range from 0.60 to 6.0 mol%, more preferably in the range from 1.20 to 4.0 mol%, most preferably in the range from 1.75 to 3.0 mol%.

As would be well understood by the person skilled in the art, the comonomer content of the polyethylene composition (PC) is expressed relative to the total amount of the polymeric part of the composition, i.e. excluding carbon black and any other additives.

The polyethylene composition (PC) preferably has a content of methyl groups per 1000 carbons ($CH_3$/1000C), as determined by infrared (IR) spectroscopic analysis, in the range from 10 to 20, more preferably in the range from 12 to 18, most preferably in the range from 13 to 17. Whilst, in the broadest sense, any infrared (IR) spectroscopic analysis should provide consistent results, it is particularly preferred that the method as described in the determination methods is employed.

The polyethylene composition (PC) preferably has a flexural modulus, determined according to ISO 178, in the range from 200 to 500 MPa, more preferably in the range from 300 to 475 MPa, most preferably in the range from 400 to 450 MPa.

The polyethylene composition (PC) preferably has a tensile stress at break, determined according to ISO 527, in the range from 27 to 60 MPa, more preferably in the range from 30 to 50 MPa, most preferably in the range from 35 to 45 MPa.

The polyethylene composition (PC) preferably has a tensile strain at break, determined according to ISO 527, in the range from 500 to 750%, more preferably in the range from 600 to 720%, most preferably in the range from 650 to 700%.

The polyethylene composition (PC) preferably has a taber abrasion resistance, determined according to ASTM D 4060, in the range from 10.0 to 25.0 mg, more preferably in the range from 12.0 to 22.0 mg, most preferably in the range from 14.0 to 18.0 mg.

The polyethylene composition (PC) preferably has a shore D hardness after 1 second, determined according to ISO 868, in the range from 40 to 60, more preferably in the range from 45 to 55, most preferably in the range from 48 to 52.

The polyethylene composition (PC) preferably has a shore D hardness after 3 seconds, determined according to ISO 868, in the range from 40 to 60, more preferably in the range from 44 to 54, most preferably in the range from 47 to 51.

The polyethylene composition (PC) preferably has a shore D hardness after 15 seconds, determined according to ISO 868, in the range from 40 to 60, more preferably in the range from 43 to 53, most preferably in the range from 45 to 49.

In addition to the multimodal ethylene-butene-hexene terpolymer (PE), the polyethylene composition (PC) preferably further comprises carbon black (CB).

Preferably the polyethylene composition (PC) comprises an amount of carbon black (CB) in the range from 0.5 to 4.0 wt.-%, more preferably in the range from 1.0 to 3.0 wt.-%, more preferably in the range from 1.5 to 2.5 wt.-%, relative to the total weight of the polyethylene composition (PC).

In addition to the multimodal ethylene-butene-hexene terpolymer (PE), the optional carbon black (CB), the polyethylene composition (PC) may further comprise further additive(s) (A). The skilled practitioner would be able to select suitable additives that are well known in the art.

The further additive(s) (A) are preferably selected from antioxidants, process stabilizers, UV-stabilizers, pigments other than carbon black, fillers, antistatic additives, antiblock agents, nucleating agents, acid scavengers, slip agent, polymer processing agent (PPA) and mixtures thereof.

It is understood that the content of additives (A), given with respect to the total weight of the polyethylene composition (PC), includes any carrier polymers used to introduce the additives to said polyethylene composition (PC), i.e. masterbatch carrier polymers. Any carrier polymers used to introduce the carbon black (CB) to the polyethylene composition (PC) are also included in the content of additives (A). An example of such a carrier polymer would be a polyethylene, such as HDPE, LDPE, or LLDPE, in the form of powder.

If present, the content of the further additive(s) in the range from 0.1 to 6.0 wt.-%, relative to the total weight of the polyethylene composition (PC).

In one embodiment, the polyethylene composition (PC) comprises, more preferably consists of:

a) from 90.0 to 99.5 wt.-%, more preferably from 92.0 to 99.0 wt.-%, most preferably from 94.0 to 97.0 wt.-%, relative to the total weight of the polyethylene composition (PC), of the multimodal ethylene-butene-hexene terpolymer (PE);
b) from 0.5 to 4.0 wt.-%, more preferably from 1.0 to 3.0 wt.-%, most preferably from 1.5 to 2.5 wt.-%, relative to the total weight of the polyethylene composition (PC), of carbon black (CB); and
c) optionally from 0.1 to 6.0 wt.-%, relative to the total weight of the polyethylene composition (PC), of further additive(s) (A).

Accordingly the polyethylene composition (PC) may comprise, more preferably consist of:

a) from 90.0 to 99.5 wt.-%, relative to the total weight of the polyethylene composition (PC), of the multimodal ethylene-butene-hexene terpolymer (PE);
b) from 0.5 to 4.0 wt.-%, relative to the total weight of the polyethylene composition (PC), of carbon black (CB); and
c) optionally from 0.1 to 6.0 wt.-%, relative to the total weight of the polyethylene composition (PC), of further additive(s) (A).

More preferably the polyethylene composition (PC) comprises, more preferably consist of:

a) from 92.0 to 99.0 wt.-%, relative to the total weight of the polyethylene composition (PC), of the multimodal ethylene-butene-hexene terpolymer (PE);
b) from 1.0 to 3.0 wt.-%, relative to the total weight of the polyethylene composition (PC), of carbon black (CB); and

c) optionally from 0.1 to 5.0 wt.-%, relative to the total weight of the polyethylene composition (PC), of further additive(s) (A).

Yet more preferably, the polyethylene composition (PC) comprises, more preferably consist of:

a) from 94.0 to 97.0 wt.-%, relative to the total weight of the polyethylene composition (PC), of the multimodal ethylene-butene-hexene terpolymer (PE);
b) from 1.5 to 2.5 wt.-%, relative to the total weight of the polyethylene composition (PC), of carbon black (CB); and
c) optionally from 0.1 to 4.5 wt.-%, relative to the total weight of the polyethylene composition (PC), of further additive(s) (A).

In embodiments wherein the polyethylene composition (PC) is free from carbon black, the polyethylene composition comprises, preferably consists of:

a) from 95.0 to 99.9 wt.-%, more preferably from 96.0 to 99.5 wt.-%, most preferably from 97.0 to 99.0 wt.-%, relative to the total weight of the polyethylene composition (PC), of the multimodal ethylene-butene-hexene terpolymer (PE); and
b) optionally from 0.1 to 5.0 wt.-%, more preferably from 0.5 to 4.0 wt.-%, most preferably from 1.0 to 3.0 wt.-%, relative to the total weight of the polyethylene composition (PC), of further additive(s) (A).

In embodiments wherein the polyethylene composition (PC) comprises carbon black, the polyethylene composition (PC) preferably has a density, determined according to ISO 1183, in the range from 925 to 940 kg/m$^3$, more preferably in the range from 928 to 938 kg/m$^3$, more preferably in the range from 930 to 935 kg/m$^3$.
In embodiments wherein the polyethylene composition (PC) does not comprise carbon black, the polyethylene composition (PC) preferably has a density, determined according to ISO 1183, in the range from 910 to 930 kg/m$^3$, more preferably in the range from 913 to 925 kg/m$^3$, most preferably in the range from 915 to 920 kg/m$^3$.

**Process for producing the polyethylene composition (PC)**

In a second aspect, the present application is directed to a process for producing the polyethylene composition of the first aspect.
The process of the second aspect comprises, more preferably consists of, the steps of:

i) providing a catalyst;
ii) optionally prepolymerizing a catalyst in a prepolymerization reactor in the presence of ethylene and 1-butene comonomer units, thereby obtaining a prepolymerized catalyst;
iii) polymerizing ethylene and 1-butene comonomer units in a first polymerization reactor in the presence of the optionally prepolymerized catalyst to produce a first polymerization mixture comprising the catalyst and a first polymer fraction (PE1) consisting of ethylene and 1-butene comonomers;
iv) transferring the first polymerization mixture into a second polymerization reactor;
v) polymerizing ethylene and 1-hexene comonomer units in the second polymerization reactor in the presence of the catalyst to produce a second polymerization mixture comprising the catalyst, the first polymer fraction (PE1) consisting of ethylene and 1-butene comonomers, and a second polymer fraction (PE2) consisting of ethylene and 1-hexene comonomers;
vi) compounding said second polymerization mixture, optionally with the addition of carbon black (CB) and/or one or more further additives (A) to form the polyethylene composition (PC).

It is preferred that the first polymerization reactor is a slurry phase reactor, more preferably a loop reactor.
The second reactor is preferably a gas phase reactor, more preferably a fluidized bed gas phase reactor.
The polymerization of the first and second polymer fractions in the first and second polymerization stages may be preceded by a prepolymerization step (i.e. step ii). The purpose of the prepolymerization is to polymerize a small amount of polymer (i.e. the optional third polymer fraction PE3) onto the catalyst at a low temperature and/or a low monomer concentration. By prepolymerization it is possible to improve the performance of the catalyst in slurry and/or modify the properties of the final polymer. The prepolymerization step may be conducted in slurry or in gas phase. Preferably prepolymerization is conducted in slurry, preferably in a loop reactor. The prepolymerization is then preferably conducted in an inert diluent, preferably the diluent is a low-boiling hydrocarbon having from 1 to 4 carbon atoms or a mixture of such hydrocarbons.
The catalyst can be fed to any polymerization stage but must fed to the first polymerization stage or to the prepolymerization stage, when present. The catalyst components are preferably all introduced to the prepolymerization step.

For the compounding step (vi), it is preferred to use a conventional compounding or blending apparatus, e.g. a Banbury mixer, a 2-roll rubber mill, Buss-co-kneader or a twin-screw extruder. More preferably, mixing is accomplished in a co-rotating twin-screw extruder. The polymer materials recovered from the extruder are usually in the form of pellets.

**Catalyst**

The catalyst used in the process of the second aspect is preferably a single site catalyst, more preferably a metallocene catalyst.

Preferably the catalyst has the following formula (I):

$$(L)_m R_n M X_q \qquad (I)$$

wherein

"M" is a transition metal (M) transition metal (M) of Group 3 to 10 of the Periodic Table (IUPAC 2007),
each "X" is independently a monoanionic ligand, such as a $\sigma$-ligand,
each "L" is independently an organic ligand which coordinates to the transition metal "M",
"R" is a bridging group linking said organic ligands (L),
"m" is 1, 2 or 3, preferably 2
"n" is 0, 1 or 2, preferably 1,
"q" is 1, 2 or 3, preferably 2 and
m+q is equal to the valency of the transition metal (M).

"M" is preferably selected from the group consisting of zirconium (Zr), hafnium (Hf), or titanium (Ti), more preferably selected from the group consisting of zirconium (Zr) and hafnium (Hf). "X" is preferably a halogen, most preferably Cl.

Most preferably the organometallic compound is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103

Most preferred single site catalyst system is a metallocene catalyst system which means the catalytically active metallocene complex, as defined above, together with a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylalumoxane (MAO), tetraisobutylalumoxane (TIBAO) or hexaisobutylalumoxane (HIBAO).

It is particularly preferred that the polyethylene composition (PC) according to the first embodiment is obtainable by, more preferably obtained by, the process steps of the second aspect.

**Article**

The present invention is further directed to a layer element (LE) comprising the polyethylene composition (PC) of the first aspect.

Preferably the layer element (LE) comprises the polyethylene composition (PC) in an amount of at least 95 wt.-%, more preferably at least 98 wt.-%, most preferably at least 99 wt.-%.

The present invention is furthermore directed to a cable comprising a conductor surrounded by one or more layers, wherein at least one layer is the layer element (LE).

The cable usually comprises of at least one conductor and at least one insulation layer comprising the polyethylene composition as described above or below.

The term "conductor" means herein above and below that the conductor comprises one or more wires. The wire can be for any use and be e.g. optical, telecommunication or electrical wire. Moreover, the cable may comprise one or more such conductors. Preferably the conductor is an electrical conductor and comprises one or more metal wires. The cable is preferably a power cable. A power cable is defined to be a cable transferring energy operating at any voltage, typically operating at voltages higher than 1 kV. The voltage applied to the power cable can be alternating (AC), direct (DC), or transient (impulse). The polyethylene composition of the invention is very suitable for power cables, especially for power cables operating at voltages 6 kV to 36 kV (medium voltage (MV) cables) and at voltages higher than 36 kV, known as high voltage (HV) cables and extra high voltage (EHV) cables, which EHV cables operate, as well known, at very high voltages. The terms have well known meanings and indicate the operating level of such cables.

For low voltage applications the cable system typically either consists of one conductor and one insulation layer comprising the polyethylene composition as described above or below, or of one conductor, one insulation layer comprising the polyethylene composition as described above or below and an additional jacketing layer, or of one conductor, one semiconductive layer and one insulation layer comprising the polyethylene composition as described above or below.

For medium and high voltage applications the cable system typically consists of one conductor, one inner semiconductive layer, one insulation layer comprising the polyethylene composition as described above or below and one outer semiconductive layer, optionally covered by an additionally jacketing layer.

The semiconductive layers mentioned preferably comprise, more preferably consist of a thermoplastic polyolefin composition, preferably a polypropylene composition or a polyethylene composition, containing a sufficient amount of electrically conducting solid fillers preferably carbon black. It is preferred that the thermoplastic polyolefin composition of the semiconductive layer(s) is a polyethylene composition.

Preferably the layer being the layer element (LE) is a jacketing layer.

## EXAMPLES

### 1. Measurement methods

### Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_5$ of polyethylene was measured at a temperature of 190 °C and a load of 5 kg, the $MFR_2$ of polyethylene at a temperature of 190 °C and a load of 2.16 kg and the $MFR_{21}$ of polyethylene was measured at a temperature of 190 °C and a load of 21.6 kg. The quantity FRR (flow rate ratio) denotes the ratio of flow rates at different loads. Thus, $FRR_{21/5}$ denotes the value of $MFR_{21}/MFR_5$.

The $MFR_2$ of the individual fractions of a multimodal copolymer/terpolymer may be calculated from the split of the individual fractions and the $MFR_2$ of the base resin as follows:

$$LogMFR_{final} = wt\%_{1st} \times LogMFR_{1st} + wt\%_{2nd} \times LogMFR_{2nd} + wt\%_{3rd} \times LogMFR_{3rd}$$

wherein

- "final" means "of the polyethylene resin",
- "1st" means "of the polymer component produced in the first reactor",
- "2nd" means "of the polymer component produced in the second reactor",
- "3rd" means "of the polymer component produced in the third reactor".

If fewer or more than 3 fractions are present, the skilled person would know to adjust the above equation accordingly.

### Density

Density of the polymer was measured according to IS0 1183-1:2019 Method A on compression moulded specimen prepared according to ISO 17855-2:2016 and is given in $kg/m^3$. Compression moulding is done with a controlled cooling press, moulding temperature for PE is 180 °C, cooling rate 15 °C/min. Conditioning of specimens at 23 °C $\pm$ 2 °C for PE for a minimum of 16h. Density determination at 23 °C$\pm$ 1 °C, immersion-liquid isododecane, no buoyancy correction, density reported to 0.1 $kg/m^3$.

### Comonomer content

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1$H and $^{13}$C respectively. All spectra were recorded using a $^{13}$C optimised 7 mm magic-angle spinning (MAS) probehead at 150 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. {klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra.

Quantitative $^{13}$C{$^1$H} NMR spectra were processed, integrated and relevant quantitative properties determined from the integrals. All chemical shifts are internally referenced to the bulk methylene signal ($\delta+$) at 30.00 ppm.

The amount of ethylene was quantified using the integral of the methylene ($\delta+$) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

fBtotal = (Btotal / (Etotal + Btotal + Htotal)

The amount isolated 1-butene incorporated in EEBEE sequences was quantified using the integral of the $_*$B2 sites at 38.3 ppm accounting for the number of reporting sites per comonomer:

$$B = I_{*B2}$$

The amount consecutively incorporated 1-butene in EEBBEE sequences was quantified using the integral of the $\alpha\alpha$B2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the $\beta\beta$B2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / (Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the $_*B4$ sites at 39.9 ppm accounting for the number of reporting sites per comonomer:

$$H = I_{*B4}$$

The amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the $\beta\beta B4B4$ site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B\ [mol\%] = 100 * fB$$

$$H\ [mol\%] = 100 * fH$$

The weight percent comonomer incorporation is calculated from the mole fraction:

$$B\ [wt\%] = 100 * (fB * 56.11) / ((fB * 56.11) + (fH * 84.16) + ((1-(fB + fH)) * 28.05))$$

$$H\ [wt\%] = 100 * (fH * 84.16) / ((fB * 56.11) + (fH * 84.16) + ((1-(fB + fH)) * 28.05))$$

References:

klimke06
Klimke, K., Parkinson, M., Piel, C., Kaminsky, W., Spiess, H.W., Wilhelm, M., Macromol. Chem. Phys. 2006;207:382.
parkinson07
Parkinson, M., Klimke, K., Spiess, H.W., Wilhelm, M., Macromol. Chem. Phys. 2007;208:2128. pollard04
Pollard, M., Klimke, K., Graf, R., Spiess, H.W., Wilhelm, M., Sperber, O., Piel, C., Kaminsky, W., Macromolecules 2004;37:813.
filip05

Filip, X., Tripon, C., Filip, C., J. Mag. Resn. 2005, 176, 239
griffin07
Griffin, J.M., Tripon, C., Samoson, A., Filip, C., and Brown, S.P., Mag. Res. in Chem. 2007 45, S1, S198
castignolles09
Castignolles, P., Graf, R., Parkinson, M., Wilhelm, M., Gaborieau, M., Polymer 50 (2009) 2373 busico01
Busico, V., Cipullo, R., Prog. Polym. Sci. 26 (2001) 443
busico97
Busico, V., Cipullo, R., Monaco, G., Vacatello, M., Segre, A.L., Macromoleucles 30 (1997) 6251 zhou07
Zhou, Z., Kuemmerle, R., Qiu, X., Redwine, D., Cong, R., Taha, A., Baugh, D. Winniford, B., J. Mag. Reson. 187 (2007) 225 busico07
Busico, V., Carbonniere, P., Cipullo, R., Pellecchia, R., Severn, J., Talarico, G., Macromol. Rapid Commun. 2007, 28, 1128
resconi00
Resconi, L., Cavallo, L., Fait, A., Piemontesi, F., Chem. Rev. 2000, 100, 1253

**Rheological parameters**

The characterization of polymer melts by dynamic shear measurements complies with ISO standards 6721-1 and 6721-10. The measurements were performed on a rotational rheometer MCR501 from Anton Paar, equipped with a 25 mm parallel plate geometry. Measurements were undertaken on compression moulded plates using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta^*$, the dynamic shear viscosity, $\eta$', the out-of-phase component of the complex shear viscosity, $\eta$" and the loss tangent, tan $\eta$, which can be expressed as follows:

$$G' = \frac{\sigma_0}{\gamma_0} \cos\delta \ [Pa] \qquad (3)$$

$$G'' = \frac{\sigma_0}{\gamma_0} \sin\delta \ [Pa] \qquad (4)$$

$$G* = G' + iG'' \ [Pa] \qquad (5)$$

$$\eta* = \eta' - i\eta'' \ [Pa \cdot s] \qquad (6)$$

$$\eta' = \frac{G''}{\omega} \ [Pa \cdot s] \qquad (7)$$

$$\eta'' = \frac{G'}{\omega} \ [\text{Pa·s}] \qquad\qquad (8)$$

The determination of so-called Shear Thinning Index, which correlates with MWD and is independent of Mw, is done as described in equation 9.

$$\text{SHI}_{(x/y)} \ = \ \frac{\text{Eta* for } (G^* = x\ \text{kPa})}{\text{Eta* for } (G^* = y\ \text{kPa})} \qquad\qquad (9)$$

For example, the $\text{SHI}_{(2.7/210)}$ is defined by the value of the complex viscosity, in

Pa s, determined for a value of G* equal to 2.7 kPa, divided by the value of the complex viscosity, in Pa s, determined for a value of G* equal to 210 kPa and the $\text{SHI}_{(5/200)}$ is defined by the value of the complex viscosity, in Pa s, determined for a value of G* equal to 5 kPa, divided by the value of the complex viscosity, in Pa s, determined for a value of G* equal to 200 kPa.

The values of storage modulus (G'), loss modulus (G"), complex modulus (G*) and complex viscosity ($\eta^*$) were obtained as a function of frequency ($\omega$).

Thereby, e.g. $\eta^*_{300\text{rad/s}}$ ($\text{eta}^*_{300\text{rad/s}}$) is used as abbreviation for the complex viscosity at the frequency of 300 rad/s and $\eta^*_{0.05\text{rad/s}}$ ($\text{eta}^*_{0.05\text{rad/s}}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $\tan_{005}$ is used as abbreviation for the ratio of the loss modulus (G") and the storage modulus (G') at 0.05 rad/s and $\tan_{300}$ is used as abbreviation for the ratio of the loss modulus (G") and the storage modulus (G') at 300 rad/s.

The elasticity balance $\tan_{0.05}/\tan_{300}$ is defined as the ratio of the loss tangent $\tan_{0.05}$ and the loss tangent $\tan_{300}$.

Besides the above mentioned rheological functions one can also determine other rheological parameters such as the so-called elasticity index *EI(x)*. The elasticity index *Ei(x)* is the value of the storage modulus, G' determined for a value of the loss modulus, G" of x kPa and can be described by equation 10.

$$EI(x) = G' \ for \ (G'' = x\ kPa) \ [\text{Pa}] \qquad\qquad (10)$$

For example, the EI(5kPa) is the defined by the value of the storage modulus G', determined for a value of G" equal to 5 kPa.

The polydispersity index, *PI,* is defined by equation 11.

$$PI = \frac{10^5}{G'(\omega_{COP})}, \qquad\qquad \omega_{COP} = \omega \ \text{for} \ (G' = G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.

[2] "The influence of molecular structure on some rheological properties of polyethylene", Heino, E.L., Borealis Polymers Oy, Porvoo, Finland, Annual Transactions of the Nordic Rheology Society, 1995.

[3] "Definition of terms relating to the non-ultimate mechanical properties of polymers", Pure & Appl. Chem., Vol.

70, No. 3, pp. 701-754, 1998.

**Molecular weight measurements (Mn, Mn, Mz, Mw/Mn, Mz/Mw)**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x M_i)}{\sum_{i=1}^{N} A_i} \quad (2)$$

$$M_z = \frac{\sum_{i=1}^{N} (A_i x M_i^2)}{\sum_{i=1}^{N} (A_i/M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with a multiple band infrared detector model IR5 (PolymerChar, Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C at a constant flow rate of 1 mL/min. 200 $\mu$L of sample solution was injected per analysis. Data collection was performed by using PolymerChar GPC-one software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \text{ x } 10^{-3} \text{ mL/g,} \quad \alpha_{PS} = 0.655$$

$$K_{PE} = 39 \text{ x } 10^{-3} \text{ mL/g,} \quad \alpha_{PE} = 0.725$$

$$K_{PP} = 19 \text{ x } 10^{-3} \text{ mL/g,} \quad \alpha_{PP} = 0.725$$

A third order polynomial fit was used to fit the calibration data.

All samples were prepared in the concentration range of 0.5-1 mg/mL and dissolved at 160 °C for 2.5 hours for PP or 3 hours for PE under continuous gentle shaking.

**Determination of the CH$_3$/1000C alongside the molecular weight (logM)**

The IR5 detector of the gel permeation chromatography method given above provides different detector signals, which were designated as concentration signal (broad spectral band covering the spectral region from 2800 cm$^{-1}$ to 3000 cm$^{-1}$) , methyl (CH$_3$) (narrow band filter centered at 2959 cm$^{-1}$) and methylene (CH$_2$) (centered at 2928 cm$^{-1}$) signal. The ratio of the methyl to the methylene detector signals is correlating to the total amount of methyl (CH$_3$) per 1000 carbon atoms (CH$_3$/1000C) (A. Ortin, B. Monrabal, J. Montesinos, P. del Hierro, Macromol. Symp. 2009, 282, 65-70). The determination of the CH$_3$/1000C using an IR5 detector can be performed by calibrating the CH$_3$/CH$_2$ ratio versus the nominal CH$_3$/1000 backbone carbon content. A linear fit was used for this purpose. The branching degree of all calibration set samples was determined by $^{13}$C melt-state NMR as described in K. Klimke, M. Parkinson, C. Piel, W. Kaminsky, H. W. Spiess, M. Wilhelm, Macromol. Chem. and Phys., 2006, 207, 382; M. Parkinson, K. Klimke, H. W.

Spiess, M. Wilhelm, Macromol. Chem. and Phys., 2007, 208, 2128. The calibration set used for this method includes 17 different short chain branched polyethylenes, both single site catalysed and fractions of Ziegler Natta catalysed polyethylene-co-butene, polyethylene-co-hexene and polyethylene-co-octene covering an overall branching level up to 80 methyl groups per 1000 carbons ($CH_3$/1000C).

**Tensile Properties**

Tensile properties were measured at 23 °C according to ISO 527-1 with a specimen Type 5A, at cross head speed 50 mm/min. Test specimens were notched out of the sheets as per Type 5A dimensions and compression molded sheets of thickness 2.0 mm was compression moulded according to ISO 17855-2:2016 at molding temperature of 200 °C and pressure of 5.74 MPa. The material was pre-heated by applying light contact pressure for 5 min. Then full pressure was applied for 5 min, after which the material was cooled with a cooling rate of 15 °C/min and the demolding temperature was 40 °C.

**Flexural modulus**

The flexural modulus was determined according to ISO 178. The samples having a dimension of 80 x 10 x 4 mm (length x width x thickness) were compression moulded according to ISO 17855-2:2016 at molding temperature of 200 °C and pressure of 5.74 MPa. The material was pre-heated by applying light contact pressure for 10 min. Then full pressure was applied for 5 min, after which the material was cooled with a cooling rate of 15 °C/min and the demolding temperature was 40 °C. The specimens for testing were then cut out and milled from these samples to the correct dimension. The specimens were conditioned at 23 °C and 50% relative humidity. The length of the span between the supports was 64 mm and the test speed was 2 mm/min.

**Shore D**

Shore D (1s, 3s, or 15s) was determined according to ISO868 on moulded specimen with a thickness of 4 mm. The shore hardness was determined after 1 second, 3 seconds or 15 seconds after the pressure foot is in firm contact with the test specimen. The specimen was compression moulded according to ISO 17855-2:2016. Compression moulding is done with a controlled cooling press, moulding temperature for PE is 180 °C, cooling rate 15 °C/min. Conditioning of specimens at 23 °C $\pm$ 2 °C for PE for a minimum of 16h..

**Taber abrasion (wear index)**

Abrasion resistance was tested on 2 mm thick compression moulded plaques compression moulded according to ISO 17855-2:2016 at molding temperature of 200 °C and pressure of 5.74 MPa. The material was pre-heated by applying light contact pressure for 5 min. Then full pressure was applied for 5 min, after which the material was cooled with a cooling rate of 15 °C/min and the demolding temperature was 40 °C. The specimens for testing were the cut our and milled from these samples to the correct dimension. The testing was performed on a Taber abraser according to ASTM D 4060 with the abrasive wheel CS17. Two specimens were tested for each material, and the wear index of the materials was determined after 5000 cycles of abrasion. The wear index is defined as the weight loss in mg per 1000 cycles of abrasion.

**Stress relaxation (relaxation vs. time)**

To determine the relaxation behaviour, stress relaxation tests were conducted using a Paar Physica MCR 501 rotational rheometer. A parallel-plate geometry with a diameter of 25 mm and a gap of 1.8 mm was chosen as measuring system. The tests were conducted at a set temperature of 190 °C using a strain step of 40%. The test specimens can be prepared in a disk shape by compression moulding with a thickness of about 2 mm, directly on a frame mould or by stamping out from a plaque using a cutting die, with the required diameter. The specimen was loaded between the plates of the pre-heated rheometer and the heating chamber was closed to allow for the sample to melt. Before the application of the strain step, and after loading the sample onto the plates, a waiting time for thermal equilibration inside the heating chamber of about 5 to 10 minutes was applied. The heating chamber was continuously purged with nitrogen during the tests to avoid degradation of the sample. After the step strain is applied, the test geometry was kept on a fixed angular position and the decaying (relaxation) stress (in Pascal, Pa) was determined as a function of time. The relaxation modulus (in Pascal, Pa) as a function of time is then determined by dividing the stress by the applied strain (in dimensionless units). The relaxation behaviour is characterized by the parameter Time (G(t)=100 Pa), which is the time (in seconds) at which the relaxation modulus attains an arbitrary value of 100 Pascal (Pa). Lower values is an indication of lower shrinkage. Materials with high elastic share have taken longer time to relax and consequently most of its elastic stresses would be frozen into the resultant jacket after the drawing operation (Shrinkage).

### 2. Examples

#### 2.1 Catalyst preparation for IE1

130 grams of a metallocene complex bis(1-methyl-3-n-butylcyclopentadienyl) zirconium (IV) dichloride (CAS no. 151840-68-5), and 9.67 kg of a 30% solution of commercial methylalumoxane (MAO) in toluene were combined and 3.18 kg dry, purified toluene was added. The thus obtained complex solution was added onto 17 kg silica carrier Sylopol 55 SJ (supplied by Grace) by very slow uniform spraying over 2 hours. The temperature was kept below 30 °C. The mixture was allowed to react for 3 hours after complex addition at 30 °C.

#### 2.2 Catalyst preparation for CE1

The polymerization catalyst for polymerizing inventive example IE 1 was prepared according to example 1 of EP 1 378 528 A1.

#### 2.3 Polymerization

The subsequent polymerizations have been effected under the following conditions.

**Table 1** Polymerization conditions of inventive and comparative polyethylenes

|  |  | IE1 | CE1 |
|---|---|---|---|
| **Prepolymerizer** |  |  |  |
| Split | [wt.-%] | 3 | 1 |
| Temperature | [°C] | 50 | 70 |
| Pressure | [barg] | 65 | 64 |
| C2 feed | [kg/h] | 500 | 300 |
| C4 feed | [kg/h] | 19.3 | 12.0 |
| H2 feed | [kg/h] | 0.04 | 0.20 |
| Cat feed | [kg/h] | 2.60 | 2.05 |
| Cocat feed | [kg/h] | 0.01 | 1.00 |
| **1st Loop** |  |  |  |
| Split | [wt.-%] | 47 | 18 |
| Temperature | [°C] | 85 | 85 |
| Pressure | [barg] | 65 | 64 |
| H2/C2 ratio | [mol/kmol] | 0.021 | 430 |
| C4/C2 ratio | [mol/kmol] | 97.8 | 290 |
| $MFR_2$ | [g/10 min] | 2.27 | 300 |
| **2nd Loop** |  |  |  |
| Split | [wt.-%] | - | 27 |
| Temperature | [°C] | - | 85 |
| Pressure | [barg] | - | 64 |
| H2/C2 ratio | [mol/kmol] | - | 310 |
| C4/C2 ratio | [mol/kmol] | - | 620 |
| $MFR_2$ | [g/10 min] | - | 330 |

(continued)

| 2nd Loop | | | |
|---|---|---|---|
| MFR$_2$ (of 2nd Loop product) | [g/10 min] | - | 353 |
| C4 content (of 1st and 2nd Loop products combined) | [mol-%] | 0.6 | n.m. |
| **GPR** | | | |
| Split | [wt.-%] | 50 | 54 |
| Temperature | [°C] | 75 | 75 |
| Pressure | [barg] | 19 | 19 |
| H2/C2 ratio | [mol/kmol] | 0.15 | 20 |
| C4/C2 ratio | [mol/kmol] | - | 770 |
| C6/C2 ratio | [mol/kmol] | 37.9 | - |
| Density (base resin) | [kg/m$^3$] | 918.2 | 921.5 |
| MFR$_2$ (base resin) | [g/10 min] | 1.02 | 0.77 |
| MFR$_2$ (of GPR product) | [g/10 min] | 0.46 | 0.0044 |
| C4 content (of GPR product) | [mol-%] | 0.0 | n.m. |
| C6 content (of GPR product) | [mol-%] | 4.0 | 0.0 |
| C4 content (base resin) | [mol-%] | 0.3 | 4.1 |
| C6 content (base resin) | [mol-%] | 2.0 | 0.0 |
| C4+C6 content (base resin) | [mol-%] | 2.2 | 4.1 |
| *n.m. - not measured | | | |

The IE1 base resin was compounded in a co-rotating twin-screw extruder Mixtron LCM450H at 264 °C with 0.32 wt.-% antioxidant (Songnox 41B FF from Songwon Industrial Co- Ltd (S. Korea); this is a 1:4-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4), 0.03 wt.-% of lubricant blend (Dynamar FX-5922 from 3M Ltd (USA)), and 5.4 wt.-% of a carbon black masterbatch having a carbon black content of 40 wt.-%, commercially available from Astra polymers under the trade name CBMB HDBM 40.

The CE1 base resin was compounded in a co-rotating twin-screw extruder JSW CIM460P at 231 °C with 0.18 wt.-% of Irganox B 141 (ED) (commercially available from BASF AG (Germany), being a 1:1 mixture of Pentaerythrityl-tetrakis(3-(3',5'-di-tert. butyl-4-hydroxyphenyl)-propionate, CAS-no. 6683-19-8 and N,N'-bis (3(3',5'-di-tert. butyl-4'-hydroxyphenyl)propionyl) hydrazine, CAS-no. 32687-78-8), 0.10 wt.-% of Irganox B 225 (FF) (commercially available from BASF AG (Germany), being a 1:1 mixture of Pentaerythrityl-tetrakis(3-(3',5'-di-tert. butyl-4-hydroxyphenyl)-propionate, CAS-no. 6683-19-8 and Tris (2,4-di-t-butylphenyl) phosphite, CAS-no. 31570-04-4), 0.05 wt.-% of calcium stearate (commercially available from Baerlocher GmbH (Germany), with a CAS-no. 1592-23-0) and 6.6 wt.-% of a carbon black masterbatch having a carbon black content of 40 wt.-% (commercially available from Borealis AG under the trade name CBMB-LD-09-A).

### 2.4 Final composition properties

The properties of inventive and comparative examples are given in Table 2.

**Table 2** Properties of inventive and comparative polyethylene compositions

| | | IE1 | CE1 |
|---|---|---|---|
| Total carbon black content | [wt.-%] | 2.18 | 2.60 |
| Density (base resin) | [kg/m$^3$] | 918.2 | 921.5 |
| Density (composition) | [kg/m$^3$] | 933.3 | 933.1 |

(continued)

|  | | IE1 | CE1 |
|---|---|---|---|
| MFR$_2$ | [g/10 min] | 1.03 | 0.82 |
| MFR$_{21}$ | [g/10 min] | 21.22 | 68.05 |
| FRR$_{21/2}$ | [-] | 20.6 | 83.0 |
| C4 content (composition) | [mol-%] | 0.3 | 4.1 |
| C6 content (composition) | [mol-%] | 2.0 | 0.0 |
| Total comonomer content (composition) | [mol-%] | 2.2 | 4.1 |
| CH$_3$/1000C | [-] | 14.8 | 24.5 |
| Mn | [g/mol] | 22,200 | 8,930 |
| Mw | [g/mol] | 99,750 | 122,500 |
| Mz | [g/mol] | 194,500 | 698,000 |
| Mw/Mn | [-] | 4.49 | 13.72 |
| Mz/Mw | [-] | 1.95 | 5.70 |
| EI (5 kPa) | [Pa] | 541 | 2167 |
| eta$_{0.05}$ | [Pa.s] | 8100 | 19,100 |
| eta$_{300}$ | [Pa.s] | 1405 | 610 |
| SHI$_{2.7/210}$ | [-] | 2.75 | 34.0 |
| Relaxation time | [s] | 2.2 | 23.8 |
| Taber abrasion | [mg] | 15.7 | 15.8 |
| Shore D (1s) | [-] | 50 | 49 |
| Shore D (3s) | [-] | 49 | 49 |
| Shore D (15s) | [-] | 47 | 47 |
| Tensile strain at break | [%] | 685 | 770 |
| Tensile stress at break | [MPa] | 36.7 | 25.1 |
| Flexural Modulus | [MPa] | 440 | 495 |

As can be seen from Table 2, IE1 exhibits improved flexibility and tensile strength, relative to CE1, whilst maintaining excellent Shore D hardness and wear resistance. IE1 furthermore has greatly reduced shrinkage (i.e. stress relaxation time).

**Claims**

1. A polyethylene composition (PC) comprising a multimodal ethylene-butene-hexene terpolymer (PE), wherein the multimodal ethylene-butene-hexene terpolymer (PE) has a density, determined according to ISO 1183, in the range from 910 to 930 kg/m$^3$, more preferably in the range from 913 to 925 kg/m$^3$, most preferably in the range from 915 to 920 kg/m$^3$,
   wherein the polyethylene composition (PC) has:

   a) a melt flow rate (MFR$_2$), determined according to ISO 1133 at 190 °C and 2.16 kg, in the range from 0.5 to 3.0 g/10 min, more preferably in the range from 0.6 to 2.0 g/10 min, most preferably in the range from 0.7 to 1.2 g/10 min;
   b) a complex viscosity (eta$_{300}$), determined according to ISO 6721-1 at an angular frequency of 300 rad/s, in the range from 800 to 2,000 Pa.s, more preferably in the range from 1,000 to 1,800 Pa.s, most preferably in the range from 1,200 to 1,600 Pa.s; and

c) a molecular weight distribution (Mw/Mn), determined by gel permeation chromatography (GPC), in the range from 2.0 to 10.0, more preferably in the range from 3.0 to 7.0, most preferably in the range from 4.0 to 5.0.

2. The polyethylene composition (PC) according to claim 1, having one or more, preferably all, of the following properties:

a) a number average molecular weight (Mn), determined by gel permeation chromatography (GPC), in the range from 14,000 to 30,000 g/mol, more preferably in the range from 16,000 to 28,000 g/mol, most preferably in the range from 18,000 to 26,000 g/mol;

b) a weight average molecular weight (Mw), determined by gel permeation chromatography (GPC), in the range from 80,000 to 120,000 g/mol, more preferably in the range from 85,000 to 115,000 g/mol, most preferably in the range from 90,000 to 110,000 g/mol;

c) a z-average molecular weight (Mz), determined by gel permeation chromatography (GPC), in the range from 150,000 to 300,000 g/mol, more preferably in the range from 160,000 to 260,000 g/mol, most preferably in the range from 170,000 to 220,000 g/mol; and

d) a molecular weight distribution (Mz/Mw), determined by gel permeation chromatography (GPC), in the range from 1.5 to 5.0, more preferably in the range from 1.6 to 4.0, most preferably in the range from 1.7 to 3.0.

3. The polyethylene composition (PC) according to claim 1 or claim 2, having one or more, preferably all of the following properties:

a) a complex viscosity (etaoos), determined according to ISO 6721-1 at an angular frequency of 0.05 rad/s, in the range from 2,000 to 15,000 Pa.s, more preferably in the range from 4,000 to 13,000 Pa.s, most preferably in the range from 6,000 to 11,000 Pa.s;

b) a shear thinning index ($SHI_{2.7/210}$), determined according to ISO 6721-1, in the range from 1.0 to 10.0, more preferably in the range from 1.5 to 7.0, most preferably in the range from 2.0 to 4.0; and

c) an elasticity index (EI(5kPa)), determined according to ISO 6721-1, in the range from 200 to 1,500 Pa, more preferably in the range from 300 to 1,100 Pa, more preferably in the range from 400 to 700 Pa; and

d) a relaxation time (t), wherein G(t) = 100 Pa, as determined according to ISO 6721, in the range from 0.5 to 10.0 s, more preferably in the range from 1.0 to 7.0 s, most preferably in the range from 1.5 to 4.0 s.

4. The polyethylene composition (PC) according to any one of the preceding claims, wherein the multimodal ethylene-butene-hexene terpolymer (PE) has one or more, preferably all, of the following properties:

a) a 1-butene content (C4), determined by quantitative $^{13}$C-NMR spectroscopy, in the range from 0.10 to 2.0 mol%, more preferably in the range from 0.20 to 1.00 mol%, most preferably in the range from 0.25 to 0.50 mol%, relative to the total amount of the multimodal ethylene-butene-hexene terpolymer (PE);

b) a 1-hexene content (C6), determined by quantitative $^{13}$C-NMR spectroscopy, in the range from 0.50 to 4.0 mol%, more preferably in the range from 1.00 to 3.0 mol%, most preferably in the range from 1.50 to 2.5 mol%, relative to the total amount of the multimodal ethylene-butene-hexene terpolymer (PE); and

c) a total content of 1-butene and 1-hexene (C4+C6), determined by quantitative $^{13}$C-NMR spectroscopy, in the range from 0.60 to 6.0 mol%, more preferably in the range from 1.20 to 4.0 mol%, most preferably in the range from 1.75 to 3.0 mol%, relative to the total amount of the multimodal ethylene-butene-hexene terpolymer (PE).

5. The polyethylene composition (PC) according to any one of the preceding claims, having one or more, preferably all, of the following properties:

a) a melt flow rate ($MFR_{21}$), determined according to ISO 1133 at 190 °C and 21.6 kg, in the range from 10 to 40 g/10 min, more preferably in the range from 15 to 30 g/10 min, most preferably in the range from 17 to 25 g/10 min; and

b) a flow rate ratio ($FRR_{21/2}$), determined according to ISO 1133 at 190 °C and 2.16 kg/21.6 kg, in the range from 10 to 30, more preferably in the range from 15 to 25, most preferably in the range from 17 to 23.

6. The polyethylene composition (PC) according to any one of the preceding claims, further comprising an amount of carbon black (CB) in the range from 0.5 to 4.0 wt.-%, more preferably in the range from 1.0 to 3.0 wt.-%, more preferably in the range from 1.5 to 2.5 wt.-%.

7.  The polyethylene composition (PC) according to claim 6, having a density, determined according to ISO 1183, in the range from 925 to 940 kg/m$^3$, more preferably in the range from 928 to 938 kg/m$^3$, more preferably in the range from 930 to 935 kg/m$^3$.

8.  The polyethylene composition (PC) according to any one of the preceding claims, wherein the multimodal ethylene-butene-hexene terpolymer (PE) consists of:

> a) a first polymer fraction (PE1) consisting of ethylene and 1-butene comonomers;
> b) a second polymer fraction (PE2) consisting of ethylene and 1-hexene comonomers; and
> c) optionally, a third polymer fraction (PE3) consisting of ethylene and 1-butene monomers.

9.  The polyethylene composition (PC) according to claim 8, wherein the multimodal ethylene-butene-hexene terpolymer (PE) consists of:

> a) 30 to 70 wt.-%, relative to the total weight of the multimodal ethylene-butene-hexene terpolymer (PE), more preferably 38 to 58 wt.-%, most preferably 42 to 52 wt.-%, of the first polymer fraction (PE1);
> b) 30 to 70 wt.-%, relative to the total weight of the multimodal ethylene-butene-hexene terpolymer (PE), more preferably 40 to 60 wt.-%, most preferably 45 to 55 wt.-%, of the second polymer fraction (PE2); and
> c) optionally from 0.0 to 6.0 wt.-%, relative to the total weight of the multimodal ethylene-butene-hexene terpolymer (PE), more preferably 0.5 to 5.0 wt.-%, most preferably 1.0 to 4.0 wt.-%, of the third polymer fraction (PE3).

10. The polyethylene composition (PC) according to either claim 8 or claim 9, wherein

> the first polymer fraction (PE1) has a 1-butene content, determined by quantitative $^{13}$C-NMR spectroscopy, in the range from 0.20 to 4.0 mol%, more preferably in the range from 0.40 to 2.0 mol%, most preferably in the range from 0.50 to 1.0 mol%, relative to the total amount of the first polymer fraction (PE1), and/or
> the second polymer fraction (PE2) has a 1-hexene content, determined by quantitative $^{13}$C-NMR spectroscopy, in the range from 1.0 to 8.0 mol%, more preferably in the range from 2.0 to 6.0 mol%, most preferably in the range from 0.20 to 4.0 mol%, relative to the total amount of the second polymer fraction (PE2).

11. The polyethylene composition (PC) according to any one of the preceding claims, having one or more, preferably all, of the following properties:

> a) a flexural modulus, determined according to ISO 178, in the range from 200 to 500 MPa, more preferably in the range from 300 to 475 MPa, most preferably in the range from 400 to 450 MPa;
> b) a tensile stress at break, determined according to ISO 527, in the range from 27 to 60 MPa, more preferably in the range from 30 to 50 MPa, most preferably in the range from 35 to 45 MPa; and
> c) a tensile strain at break, determined according to ISO 527, in the range from 500 to 750%, more preferably in the range from 600 to 720%, most preferably in the range from 650 to 700%.

12. The polyethylene composition (PC) according to any one of the preceding claims, having one or more, preferably all, of the following properties:

> a) a taber abrasion resistance, determined according to ASTM D 4060, in the range from 10.0 to 25.0 mg, more preferably in the range from 12.0 to 22.0 mg, most preferably in the range from 14.0 to 18.0 mg;
> b) a shore D hardness after 1 second, determined according to ISO 868, in the range from 40 to 60, more preferably in the range from 45 to 55, most preferably in the range from 48 to 52;
> c) a shore D hardness after 3 seconds, determined according to ISO 868, in the range from 40 to 60, more preferably in the range from 44 to 54, most preferably in the range from 47 to 51; and
> d) a shore D hardness after 15 seconds, determined according to ISO 868, in the range from 40 to 60, more preferably in the range from 43 to 53, most preferably in the range from 45 to 49.

13. A process for producing the polyethylene composition (PC) according to any one of the preceding claims, comprising, more preferably consisting of, the steps of:

> i) providing a catalyst;
> ii) optionally prepolymerizing a catalyst in a prepolymerization reactor in the presence of ethylene and 1-butene comonomer units, thereby obtaining a prepolymerized catalyst;

iii) polymerizing ethylene and 1-butene comonomer units in a first polymerization reactor in the presence of the optionally prepolymerized catalyst to produce a first polymerization mixture comprising the catalyst and a first polymer fraction (PE1) consisting of ethylene and 1-butene comonomers;

iv) transferring the first polymerization mixture into a second polymerization reactor;

v) polymerizing ethylene and 1-hexene comonomer units in the second polymerization reactor in the presence of the catalyst to produce a second polymerization mixture comprising the catalyst, a first polymer fraction (PE1) consisting of ethylene and 1-butene comonomers, and a second polymer fraction (PE2) consisting of ethylene and 1-hexene comonomers;

vi) compounding said second polymerization mixture, optionally with the addition of carbon black (CB) and/or one or more further additives (A) to form the polyethylene composition (PC).

14. A layer element (LE) comprising the polyethylene composition (PC) according to any one of claims 1 to 12, preferably in an amount of at least 95 wt.-%, more preferably at least 98 wt.-%, most preferably at least 99 wt.-%.

15. A cable comprising a conductor surrounded by one or more layers, wherein at least one layer is the layer element (LE) of claim 14.

Europäisches
Patentamt
European
Patent Office
Office européen
des brevets

# EUROPEAN SEARCH REPORT

**Application Number**

EP 23 17 0578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 053 194 A1 (BOREALIS AG [AT]) 7 September 2022 (2022-09-07) * claim 1; example IE1; table 1+2 * | 1-5,8-14 | INV. C08F210/16 C08L23/08 C08F4/659 |
| X | EP 3 257 879 A1 (BOREALIS AG [AT]) 20 December 2017 (2017-12-20) * paragraph [0081]; claims 1-5; examples IE1-2; table 1+2 * | 1-5,8-14 | |
| X | WO 2016/083209 A1 (BOREALIS AG [AT]) 2 June 2016 (2016-06-02) * examples 1-3; table 1+2 * | 1-5,8-14 | |
| X | WO 2021/234040 A1 (BOREALIS AG [AT]) 25 November 2021 (2021-11-25) | 1-15 | |
| Y | * page 1, line 20/21; claims 1, 7, 11, 12; example all; tables 1-6 * | 1-15 | |
| X | EP 2 182 526 A1 (BOREALIS AG [AT]) 5 May 2010 (2010-05-05) | 1-15 | |
| Y | * paragraph [0086]; claim 1; examples 1, 3; table 1 * | 1-15 | |

**TECHNICAL FIELDS SEARCHED (IPC)**

C08F
C08L

The present search report has been drawn up for all claims

| Place of search | Date of completion of the search | Examiner |
|---|---|---|
| Munich | 10 October 2023 | Bernhardt, Max |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 17 0578

This annex lists the patent family members relating to the patent documents cited in  the above-mentioned European search report.
The members are as contained in the European Patent Office EDP file on
The European Patent Office is in no way liable for these particulars which are merely given for the purpose of information.

10-10-2023

| Patent document cited in search report | | Publication date | Patent family member(s) | | Publication date |
|---|---|---|---|---|---|
| EP 4053194 | A1 | 07-09-2022 | EP | 4053194 A1 | 07-09-2022 |
|  |  |  | WO | 2022184662 A1 | 09-09-2022 |
| EP 3257879 | A1 | 20-12-2017 | NONE | | |
| WO 2016083209 | A1 | 02-06-2016 | CN | 107000406 A | 01-08-2017 |
|  |  |  | EP | 3224303 A1 | 04-10-2017 |
|  |  |  | ES | 2930262 T3 | 09-12-2022 |
|  |  |  | KR | 20170086565 A | 26-07-2017 |
|  |  |  | TW | 201623409 A | 01-07-2016 |
|  |  |  | US | 2018346622 A1 | 06-12-2018 |
|  |  |  | WO | 2016083209 A1 | 02-06-2016 |
| WO 2021234040 | A1 | 25-11-2021 | AU | 2021275475 A1 | 22-12-2022 |
|  |  |  | CN | 115768828 A | 07-03-2023 |
|  |  |  | EP | 4153677 A1 | 29-03-2023 |
|  |  |  | US | 2023203286 A1 | 29-06-2023 |
|  |  |  | WO | 2021234040 A1 | 25-11-2021 |
| EP 2182526 | A1 | 05-05-2010 | CA | 2741137 A1 | 06-05-2010 |
|  |  |  | CN | 102217006 A | 12-10-2011 |
|  |  |  | EP | 2182526 A1 | 05-05-2010 |
|  |  |  | EP | 2351049 A1 | 03-08-2011 |
|  |  |  | ES | 2763161 T3 | 27-05-2020 |
|  |  |  | KR | 20110084279 A | 21-07-2011 |
|  |  |  | KR | 20160130530 A | 11-11-2016 |
|  |  |  | US | 2011253418 A1 | 20-10-2011 |
|  |  |  | US | 2016060411 A1 | 03-03-2016 |
|  |  |  | WO | 2010049260 A1 | 06-05-2010 |

EPO FORM P0459

For more details about this annex : see Official Journal of the European Patent Office, No. 12/82

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- EP 1378528 A1

**Non-patent literature cited in the description**

- **KLIMKE, K. ; PARKINSON, M. ; PIEL, C. ; KAMINSKY, W ; SPIESS, H.W ; WILHELM, M.** *Macromol. Chem. Phys,* 2006, vol. 207, 382
- **PARKINSON, M. ; KLIMKE, K. ; SPIESS, H.W. ; WILHELM, M.** *Macromol. Chem. Phys,* 2007, vol. 208, 2128
- **POLLARD, M. ; KLIMKE, K. ; GRAF, R. ; SPIESS, H.W ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M ; WILHELM, M. ; GABORIEAU, M.** *Polymer,* 2009, vol. 50, 2373
- **BUSICO, V. ; CIPULLO, R.** *Prog. Polym. Sci,* 2001, vol. 26, 443
- **BUSICO, V ; CIPULLO, R ; MONACO, G. ; VACATELLO, M. ; SEGRE, A.L.** *Macromoleucles,* 1997, vol. 30, 6251
- **ZHOU, Z. ; KUEMMERLE, R ; QIU, X. ; REDWINE, D. ; CONG, R ; TAHA, A. ; BAUGH ; D. WINNIFORD, B.** *J. Mag. Reson,* 2007, vol. 187, 225
- **BUSICO, V. ; CARBONNIERE, P. ; CIPULLO, R ; PELLECCHIA, R ; SEVERN, J ; TALARICO, G.** *Macromol. Rapid Commun,* 2007, vol. 28, 1128
- **RESCONI, L ; CAVALLO, L. ; FAIT, A ; PIEMONTESI, F.** *Chem. Rev,* 2000, vol. 100, 1253
- **HEINO, E.L ; LEHTINEN, A ; TANNER J. ; SEPPÄLÄ, J.** Rheological characterization of polyethylene fractions. *Theor. Appl. Rheol., Proc. Int. Congr. Rheol, 11th,* 1992, vol. 1, 360-362
- **HEINO, E.L.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754
- **A. ORTIN ; B. MONRABAL ; J. MONTESINOS ; P. DEL HIERRO.** *Macromol. Symp,* 2009, vol. 282, 65-70
- **K. KLIMKE ; M. PARKINSON ; C. PIEL ; W. KAMINSKY ; H. W. SPIESS ; M. WILHELM.** *Macromol. Chem. and Phys.,* 2006, vol. 207, 382
- **M. PARKINSON ; K. KLIMKE ; H. W. SPIESS ; M. WILHELM.** *Macromol. Chem. and Phys.,* 2007, vol. 208, 2128
- *CHEMICAL ABSTRACTS,* 151840-68-5
- *CHEMICAL ABSTRACTS,* 31570-04-4
- *CHEMICAL ABSTRACTS,* 6683-19-8
- *CHEMICAL ABSTRACTS,* 32687-78-8
- *CHEMICAL ABSTRACTS,* 1592-23-0